# FASCICULE DE BREVET EUROPEEN

(11) **EP 2 643 275 B1**
(45) Date de publication et mention de la délivrance du brevet: **31.10.2018**
(21) Numéro de dépôt: 11802504.8
(22) Date de dépôt: 24.11.2011
(51) Int. Cl.: C04B 7/02, C04B 28/04, C04B 111/20

(54) **NOUVEAU CIMENT RÉSISTANT AUX RÉACTIONS SULFATIQUES INTERNES ET AUX ATTAQUES SULFATIQUES EXTERNES**
GEGENÜBER INTERNEN SULFATREAKTIONEN UND EXTERNEN SULFATANGRIFFEN RESISTENTER NEUARTIGER ZEMENT
NOVEL CEMENT THAT IS RESISTANT TO INTERNAL SULPHATE REACTIONS AND TO EXTERNAL SULPHATE ATTACKS

(30) Priorité: 25.11.2010 FR 1059740
(43) Date de publication de la demande: 02.10.2013
(73) Titulaire: Vicat, 92095 Paris La Défense (FR)
(72) Inventeur: PASQUIER, Michel, F-69006 Lyon (FR); BESSETTE, Laetitia, F-38110 Saint Clair De La Tour (FR); HUE, François, F-38300 Bourgoin Jallieu (FR)
(74) Mandataire: Agasse, Stéphane
(86) Numéro de dépôt international: PCT/FR2011/052744
(87) Numéro de publication internationale: WO 2012/069763

(56) Documents cités:
- EP-A1- 0 877 007
- EP-A1- 1 955 984
- EP-A2- 1 428 804
- WO-A1-87/00828
- DD-A3- 230 519
- DE-B- 1 054 366
- FR-A1- 2 357 500
- JP-A- H06 100 338
- JP-A- 2005 194 171
- JP-A- 2009 120 433
- JP-A- 2010 173 866
- JP-A- 2012 030 982
- US-A1- 2010 101 458
- DATABASE WPI Week 200719 Thomson Scientific, London, GB; AN 2007-188051 & JP 2007 031174 A (MITSUBISHI MATERIALS CORP) 8 February 2007 (2007-02-08) & JP 2007 031174 A (MITSUBISHI MATERIALS CORP) 8 February 2007 (2007-02-08)

## Description

La présente invention a pour objet un nouveau ciment permettant la préparation de béton, de coulis ou de mortier résistant aux réactions sulfatiques internes et aux attaques sulfatiques externes.

Le béton est un matériau de construction composite fabriqué à partir de granulats naturels (sable, gravillons) ou artificiels (granulats légers) agglomérés par un liant, généralement un ciment.

Le béton est couramment utilisé pour la réalisation d'ouvrages d'art de génie civil, de bâtiments et pour la fabrication d'éléments préfabriqués. Ces ouvrages requièrent un béton confectionné avec un ciment qui garantit des caractéristiques techniques et mécaniques spécifiques, en particulier pour ce qui concerne le temps de prise et la résistance aux temps courts et à long terme.

La présence d'une certaine quantité de sulfate ($) et d'aluminate tricalcique (C₃A) dans le ciment utilisé pour la confection du béton est décrite dans la littérature comme nécessaire au maintien des ces caractéristiques techniques et mécaniques. Ainsi, le LEA'S Chemistry of cement and concrete (4ème édition), édité par P.C. Hewlett, p.272-273, enseigne qu'une quantité trop faible de sulfate entraîne une prise trop rapide (prise « flash ») nuisible à la qualité et à la résistance du béton à court ou long terme. D'autre part, il est également enseigné qu'une trop faible quantité (ou l'absence) de C₃A entraîne l'apparition de « fausse prise », c'est-à-dire d'un raidissement anormal et prématuré du ciment, quelques minutes après son contact avec l'eau.

L'ettringite est une espèce minérale composée de sulfate de calcium et d'aluminium hydraté, de formule chimique Ca₆Al₂(SO₄)₃(OH)₁₂.26H₂₀. L'ettringite est un produit de la réaction entre l'aluminate tricalcique C₃A, le sulfate $ et l'eau. L'ettringite peut se former durant la prise du béton : on parle alors d'ettringite primaire. La formation d'ettringite primaire favorise la prise du béton et ne présente aucun danger pour la durabilité de celui-ci.

Cependant, il arrive que l'ettringite ne se forme pas durant la prise du béton mais après celle-ci. Ainsi, lorsque la température du béton est élevée (supérieure à 60°C) au moment de la prise, par exemple du fait de l'exothermicité de la réaction, l'ettringite primaire se forme puis se redissout ou ne se forme pas. Tous les réactifs nécessaires à la formation d'ettringite (C₃A, $, eau) demeurent néanmoins présents dans le béton solidifié. Après le retour à température ambiante et dans un environnement propice, l'ettringite peut alors précipiter sous forme de cristaux dans le béton déjà durci : on parle alors d'ettringite différée. La réaction menant à la formation d'ettringite dans ces conditions est communément désignée par Réaction Sulfatique Interne (RSI) ou Delayed Ettringite Formation (DEF).

L'ettringite différée peut se former plusieurs années après la finalisation de l'ouvrage. Le gonflement est alors responsable de désordres importants dans la structure du béton qui se traduisent visuellement par l'apparition de fissures susceptibles d'endommager sévèrement ledit béton et donc l'ouvrage. La fissuration observée peut prendre la forme d'un réseau multidirectionnelle et les fissures peuvent s'ouvrir jusqu'à quelques millimètres.

Les premiers cas reconnus de réaction sulfatique interne datent de 1987. Ils sont apparus sur des traverses de chemin de fer préfabriquées en béton qui avaient subi un traitement thermique. De nombreux pays ont été concernés, notamment la Finlande, l'Allemagne, la Tchéquie, l'Australie, l'Afrique du sud, les États-Unis ou la Suède.

D'autres cas sont apparus dans des pièces massives de béton coulées en place. C'est le cas par exemple aux États-Unis, en Grande-Bretagne et en Italie.

Les désordres ont été observés entre trois et dix ans après la construction des pièces.

Ce phénomène a également été observé en France à partir de 1997 sur des ponts dont le béton avait été coulé en place. Il s'agit essentiellement de parties d'ouvrages massives (piles, chevêtres sur piles ou culées, etc.) en contact avec l'eau ou soumises à une forte humidité. A ce jour, plus de soixante ouvrages sont concernés, dont environ dix sont des éléments préfabriqués.

Face à ce problème majeur, différentes solutions ont été envisagées.

Une première solution consiste à préparer des ciments contenant des additifs minéraux tels que du laitier moulu de hauts fourneaux ou des cendres volantes dans de fortes proportions. Ces additions permettent de diluer le clinker et de limiter les risques de réaction sulfatique interne et leur intensité. Cependant, la maniabilité des bétons préparés à partir de ces ciments est moins bonne et leurs performances techniques sont affaiblies. En effet, des problèmes de prise sont régulièrement rencontrés, le temps de prise étant trop long et la vitesse de montée en résistance étant trop lente. Par ailleurs, les caractéristiques mécaniques des bétons ainsi préparés, comme par exemple la résistance en compression aux jeunes âges, sont détériorées par rapport à un béton préparé à partir d'un ciment sans ajout. De surcroît, les bétons ainsi préparés sont plus sensibles aux cycles gel/dégel.
Les ciments ainsi préparés ne répondent donc pas au cahier des charges techniques nécessaire à la réalisation d'ouvrages de génie civil et de bâtiments comportant des éléments massifs en contact avec l'eau ou soumis à un environnement très humide.

Une seconde solution consiste à utiliser du ciment de type CEM I ES selon la norme NF P 15-319 (liants hydrauliques - ciments pour travaux en eaux à haute teneur en sulfate - désignés par ES). Certains ciments répondant à cette norme contiennent 2,7% de C₃A (valeur calculée par le calcul de Bogue tel que défini dans le LEA 'S Chemistry of cement and concrete (4ème édition), édité par P.C. Hewlett, p.154) et 2,25% de $. Cependant, l'utilisation de ces ciments n'a pas permis d'empêcher la formation d'ettringite différée due à des réactions sulfatiques internes dans les bétons ainsi préparés.
D'autre part, l'utilisation de ces ciments ne permet pas de limiter suffisamment les attaques sulfatiques externes, c'est-à-dire les apports de sulfate par des liquides et/ou des gaz infiltrant le béton et conduisant également à la formation d'ettringite différée.

De problématiques similaires existent pour les coulis et les mortiers préparés à partir des ciments existant à la date de l'invention.

Il demeure donc nécessaire de proposer un ciment qui permette la préparation d'un béton, d'un coulis ou d'un mortier, résistant aux réactions sulfatiques internes et aux attaques sulfatiques externes, tout en maintenant des caractéristiques techniques et mécaniques, en particulier le temps de prise et la résistance aux temps courts, qui permettent leur utilisation pour la réalisation d'ouvrages d'art de génie civil, de bâtiments et pour la fabrication d'éléments préfabriqués.
La demande de brevet FR 2357500 décrit des ciments permettant la préparation de bétons résistants à la plupart des milieux corrosifs, en particulier les solutions concentrées en nitrate et en sulfate. La résistance à la corrosion provoquée par des solutions concentrées en sulfate ne pouvant être confondue avec une résistance aux réactions sulfatiques internes et aux attaques sulfatiques externes, cette demande de brevet ne traite pas de la même problématique que celle à l'origine de la présente invention. De plus, cette demande de brevet enseigne qu'il est essentiel pour obtenir une bonne résistance aux attaques de sulfate que les ciments contiennent au moins 10% de fumée de silice. Or, l'utilisation de telles quantités de silice nécessite l'ajout d'importante quantité d'eau pour préparer le béton, le coulis ou le mortier, ce qui se traduit par des consistances élevées dudit béton, coulis ou mortier, nécessitant une forte adjuvantation (superplastifiant). D'autre part, la fumée de silice est un produit onéreux.
Ainsi, à la date de la présente invention, il existe toujours un besoin pour des ciments permettant la préparation de bétons, de coulis ou de mortiers présentant des performances mécaniques et techniques compatibles avec leur utilisation pour la réalisation d'ouvrages d'art de génie civil, de bâtiments et pour la fabrication d'éléments préfabriqués, tout en limitant fortement les réactions sulfatiques internes et les attaques sulfatiques externes
Or, contre toute attente, il a maintenant été trouvé que l'utilisation de ciments contenant 2% ou moins de C₃A, moins de 1,5% de $ et 10% ou moins de fumée de silice pour la préparation d'un béton, mais également d'un coulis ou d'un mortier, permettait de limiter fortement les réactions sulfatiques internes ainsi que les attaques sulfatiques externes, tout en maintenant des performances mécaniques et techniques, en particulier le temps de prise et la résistance aux temps courts, qui permettent leur utilisation pour la réalisation d'ouvrages d'art de génie civil, de bâtiments et pour la fabrication d'éléments préfabriqués.

Ainsi, la présente invention a pour objet un ciment comprenant :
- de 90% à 100% d'un clinker contenant
   - de 50% à 80% de C₃S ;
   - de 4% à 40% de C₂S ;
   - de 0% à 20% de C₄AF ; et
   - de 0% à 2% de C₃A ;
- 0% à 10% de fumée de silice ; et
- moins de 1,5% de $ ;
   à l'exclusion des ciments comprenant :
   - 90% de clinker contenant
      - 55% de C₃S ;
      - 20% de C₂S ;
      - 15,2% de C₄AF ; et
      - 1,6% de C₃A ;
   - et 10% de fumée de silice.
Le ciment selon la présente invention permet la préparation d'un béton, mais également d'un coulis ou d'un mortier, présentant des performances mécaniques et techniques, en particulier un temps de prise et une résistance aux temps courts, qui permettent leur utilisation pour la réalisation d'ouvrages d'art de génie civil, de bâtiments et pour la fabrication d'éléments préfabriqués, tout en limitant fortement les réactions sulfatiques internes et les attaques sulfatiques externes.
Dans le cadre de la présente invention, les notations suivantes sont adoptées pour désigner les composants minéralogiques du ciment :
- C représente CaO ;
- A représente Al₂O₃ ;
- F représente Fe₂O₃ ;
- S représente SiO₂ ; et
- $ représente SO₃.
Ainsi, par exemple, la phase aluminoferrite calcique d'une composition correspondant à la formule générale C₄AF correspond en réalité à une phase (CaO)₄(Al₂O₃)(Fe₂O₃).

De plus, dans le cadre de la présente invention, les proportions exprimées en % correspondent à des pourcentages massiques par rapport au poids total de l'entité considérée (ciment, béton, coulis ou mortier).
Dans le cadre de la présente invention, les teneurs en phases correspondent à des teneurs en phases mesurées par l'analyse de diffraction des rayons X associée à la méthode de calcul de Rietveld (A Profile Refinement Method for Nuclear and Magnetic Structures, H.M. Rietveld, J. Appl. Cryst. (1969) et Advances in quantitative XRD analysis for clinker, cements, and cementitious additions, G. Walenta and T. Füllmann, International Centre for Diffraction Data, 2004, Advances in X-ray Analysis, Volume 47).
Les teneurs ainsi déterminées diffèrent des teneurs calculées selon la méthode de calcul de Bogue (telle que définie dans le LEA'S Chemistry of cement and concrete (4ème édition), édité par P.C. Hewlett, p.154) qui ne tient pas compte d'éventuels éléments mineurs présents dans les phases et des modifications que ces éléments peuvent introduire. Au contraire, l'analyse de diffraction des rayons X associée à la méthode de calcul de Rietveld permet de mesurer les teneurs en phases réellement présentes dans un clinker ou un ciment en prenant en compte les modifications et les changements de phases cristallines.

La présente invention a donc pour objet un ciment comprenant moins de 1,5% de $. De préférence la présente invention a pour objet un ciment tel que décrit précédemment comprenant moins de 1% de $.
Le ciment selon la présente invention comprend un clinker tel que défini précédemment. De préférence, la présente invention a pour objet un ciment tel que décrit précédemment comprenant un clinker dont caractéristiques suivantes sont choisies seules ou en combinaison :
- le clinker comprend moins de 2% de C₃A, de préférence de 0% à 1,5% de C₃A, de façon toute à fait préférée de 0% à 1% de C₃A ; et/ou
- le clinker comprend de 65% à 80% de C₃S.
La présente invention a pour objet un ciment comprenant de 90% à 100% d'un clinker tel que défini précédemment, et de 0% à 10% de fumée de silice. De préférence, la présente invention a pour objet un ciment tel que décrit précédemment comprenant moins de 10% de fumée de silice, de préférence encore de 0% à 5% de fumée de silice, de préférence encore de 0% à 2% de fumée de silice. De façon toute à fait préférée, la présente invention a pour objet un ciment tel que décrit précédemment exempt de fumée de silice.
En plus des constituants précédents, le ciment selon la présente invention peut également contenir du gypse pour ajuster le teneur en $, étant entendu que celle-ci doit demeurer inférieure à 1,5%. Le ciment selon la présente invention peut être préparé par tout procédé connu de l'homme de l'art. Notamment, le ciment selon la présente invention peut être préparé par un procédé comprenant les étapes suivantes :
- concassage des matières premières ;
- broyage pour obtenir la farine crue ;
- cuisson jusqu'à 1450°C ;
- trempe ;
- broyage ;
- ajout éventuel durant ou après le broyage de constituants secondaires tels que la fumée de silice ;
- ajout éventuel de gypse, d'anhydrite ou de plâtre ou d'un mélange de ceux-ci.
Le ciment selon la présente invention peut être préparé à partir de différentes matières premières telles que du calcaire, des argiles et marnes, de l'oxyde de fer, du sable siliceux et de la bauxite.
Bien que le ciment selon la présente invention soit particulièrement indiqué dans la préparation de bétons, il peut également être utilisé pour préparer des coulis ou des mortiers. Ainsi, la présente invention a également pour objet un béton, un coulis ou un mortier comprenant un ciment tel que décrit précédemment. De préférence, la présente invention a pour objet un béton comprenant un ciment tel que décrit précédemment.
La présente invention est illustrée de façon non limitative par les exemples suivants.

### Exemple 1 - Ciment 1 selon l'invention

Un ciment de type CEM I 52,5N ayant la composition rapportée dans le tableau 1 suivant a été fabriqué :

**Tableau 1**

| **Constituant** | **% (en poids)** |
|---|---|
| C | 66,31 % |
| S | 21,05 % |
| F | 4,89 % |
| A | 3,48 % |
| $ | 1,05 % |
| MgO | 0,84 % |
| TiO₂ | 0,20 % |
| P₂O₅ | 0,19 % |
| SrO | 0,10 % |
| Na₂O | 0,08 % |
| k₂O | 0,55 % |
| MnO | 0,06 % |

La perte au feu (975°C) est de 1%.

Le ciment ainsi préparé contient environ 1% de $.

D'autre part, la composition phasique de ce ciment est la suivante (valeurs mesurées par l'analyse de diffraction des rayons X associé à la méthode de calcul de Rietveld) :
- C₃S : 72% ;
- C₂S : 11 % ;
- C₄AF : 13% ; et
- C₃A : 0,9 %.

Les caractéristiques mécaniques du ciment ainsi préparé ont été mesurées et sont rapportées dans le tableau 2 ci-dessous :

**Tableau 2**

| | |
|---|---|
| Demande en eau (%) | 26,5 |
| Chaleur d'hydratation à 41h (J/g) | 245,0 |
| Retrait à 28J (µm/m) | 490,0 |
| Expansion (mm) | 1,0 |
| Début de prise (min) | 200 |
| Fin de prise (min) | 300 |
| Rc(*) à 16 heures (MPa) | 5,1 |
| Rc(*) à 2 jours (MPa) | 22,3 |
| Rc(*) à 7 jours (MPa) | 44,8 |
| Rc(*) à 28 jours (MPa) | 63,3 |
| Rc(*) à 90 jours (MPa) | 69,9 |

| | |
|---|---|
| *(*) Rc : résistance à la compression selon la norme NF EN 196-1* | |

La chaleur d'hydratation du ciment de l'invention est limitée, ce qui régule l'échauffement lors de la prise du béton préparé à partir de ce ciment.
De plus, le temps de prise et les résistances en compression du béton préparé à partir de ce ciment satisfont aux exigences pour la réalisation d'ouvrages d'art de génie civil, de bâtiments et pour la fabrication d'éléments préfabriqués.

### Exemple 2 - Ciment 2 selon l'invention

Un ciment de type CEM I 52,5N ayant la composition rapportée dans le tableau 3 suivant a été fabriqué :

**Tableau 3**

| **Constituant** | **% (en poids)** |
|---|---|
| C | 66,66 % |
| S | 21,38 % |
| F | 4,89 % |
| A | 3,46 % |
| $ | 0,91 % |
| MgO | 0,77 % |
| TiO₂ | 0,20 % |
| P₂O₅ | 0,17 % |
| SrO | 0,10 % |
| Na₂O | 0,05 % |
| MnO | 0,03 % |

Le ciment ainsi préparé contient environ 0,9% de $ et 4% de fumée de silice.

D'autre part, la composition phasique de ce ciment est la suivante (valeurs mesurées par l'analyse de diffraction des rayons X associé à la méthode de calcul de Rietveld) :
- C₃S : 72% ;
- C₂S : 12% ;
- C₄AF : 14% ; et
- C₃A : 0,8 %.

Les caractéristiques mécaniques du ciment ainsi préparé ont été mesurées et sont rapportées dans le tableau 4 ci-dessous :

**Tableau 4**

| | |
|---|---|
| Demande en eau (%) | 28,6 |
| Chaleur d'hydratation à 41h (J/g) | 283,1 |
| Retrait à 28J (µm/m) | 693,8 |
| Expansion (mm) | 0,5 |
| Début de prise (min) | 237 |
| Fin de prise (min) | 318,6 |
| Rc(*) à 16 heures (MPa) | 5,3 |
| Rc(*) à 1 jour (MPa) | 11,4 |
| Rc(*) à 2 jours (MPa) | 24,5 |
| Rc(*) à 7 jours (MPa) | 45,0 |
| Rc(*) à 28 jours (MPa) | 61,7 |
| Rc(*) à 90 jours (MPa) | 70,0 |

| | |
|---|---|
| *(*) Rc : résistance à la compression selon la norme NF EN 196-1* | |

La chaleur d'hydratation du ciment de l'invention est limitée, ce qui régule l'échauffement lors de la prise du béton préparé à partir de ce ciment.
De plus, le temps de prise et les résistances en compression du béton préparé à partir de ce ciment satisfont aux exigences pour la réalisation d'ouvrages d'art de génie civil, de bâtiments et pour la fabrication d'éléments préfabriqués.

### Exemple 3 - Bétons préparés à partir de ciments selon l'invention

Un premier béton et un second béton sont préparés respectivement à partir des ciments de l'exemple 1 (béton 1) et de l'exemple 2 (béton 2). La composition finale de ces bétons est la suivante :

**Tableau 5**

| **Composition** | **Kg/m³** |
|---|---|
| Ciment | 424 |
| Eau totale | 201 |
| Sable Palvadeau 0 / 0,315 | 98 |
| Sble Palvadeau 0,315 / 1 | 180 |
| Sable Palvadeau 1 / 4 | 189 |
| Sable Palvadeau 2 / 4 | 202 |
| Granulat Palvadeau 4 / 8 | 195 |
| Granulat Palvadeau 8 / 12,5 | 907 |

La résistance de ces bétons (béton 1 et béton 2) aux réactions sulfatiques internes est étudiée selon la méthode LPC n° 66 en comparaison d'un béton préparé à partir d'un ciment CEM I 52.5N PM ES classique et conforme à la norme NF P 15-319 (béton 3). Ce test de performance a pour objet de déterminer l'aptitude d'un béton à résister à la réaction sulfatique interne, il s'agit d'un essai de gonflement. Après confection, les éprouvettes de béton subissent un traitement thermique à 80°C pour simuler un échauffement. Ensuite le béton est exposé à deux cycles d'humidification-séchage (Séchage pendant 7 jours dans l'enceinte à 38°C et HR < 30% puis immersion pendant 7 jours dans de l'eau du réseau à 20 +/- 2°C). Les éprouvettes sont ensuite conservées dans un bac d'eau à 20°C et leur déformation longitudinale est mesurée régulièrement.

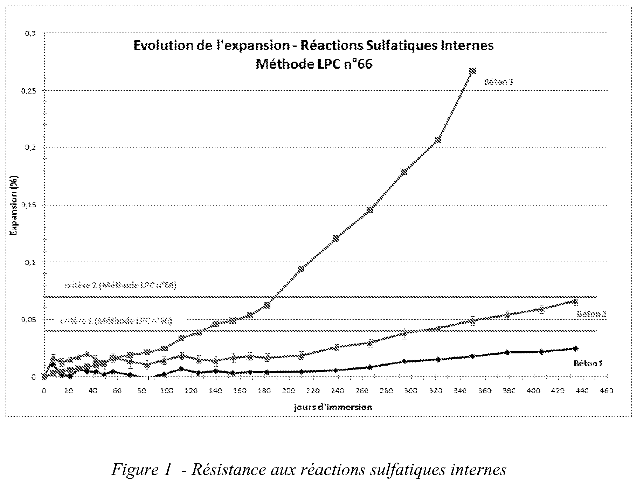

Les résultats observés sont rapportés Figure 1.

Le critère 1 selon la méthode LPC n°66 correspond à :
- à la déformation longitudinale moyenne de 3 éprouvettes est inférieure à 0,04% et aucune valeur individuelle ne dépasse 0,06% à l'échéance de 12 mois ;
- et à la variation mensuelle de la déformation longitudinale moyenne de 3 éprouvettes mesurée à partir du 3ème mois est inférieure à 0,004%.

Le critère 2 selon la méthode LPC n°66 correspond :
- à la déformation longitudinale individuelle des 3 éprouvettes est comprise entre 0,04% et 0,07% à l'échéance 12 mois. Il faut alors prolonger l'essai jusqu'au 15ème mois ;
- et à la variation mensuelle de la déformation longitudinale moyenne de 3 éprouvettes mesurée à partir du 12ème mois est inférieur à 0,004% et la variation cumulée entre le 12ème et 15ème mois est inférieure à 0,006%.

Contrairement au béton préparé à partir d'un ciment de type CEM I 52.5N PM ES, les bétons de l'invention ne développent pas de réactions sulfatiques internes.

Ainsi, le béton 1 satisfait au critère 1 de la méthode LPC n°66 et le béton 2 satisfait au critère 2 de la méthode LPC n°66, tandis que le béton préparé à partir du ciment de type CEM I 52.5N PM ES ne satisfait à aucun de ces critères.

### Exemple 4 - Mortiers préparés à partir de ciments selon l'invention

Un premier mortier et un second mortier sont préparés en mélangeant respectivement les ciments de l'exemple 1 (mortier 1) et de l'exemple 2 (mortier 2) avec du sable, de l'eau et un ajout de sulfate de calcium afin que la teneur en $ du mortier soit de 7%.

La résistance de ces mortiers (mortier 1 et mortier 2) aux attaques sulfatiques externes est mesurée par un essai conduit selon la norme ASTM C 452 en comparaison d'un mortier préparé à partir d'un ciment CEM I 52,5N PM ES classique et conforme à la norme NF P 15-319 (mortier 3).

Ce test permet de déterminer l'expansion d'un mortier en mesurant la déformation longitudinale d'une éprouvette.

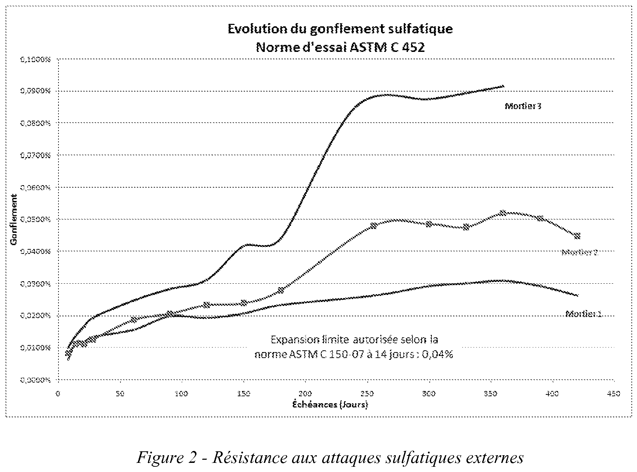

Les résultats sont rapportés Figure 2.

A 14 jours, les mortiers préparés à partir des ciments selon l'invention n'ont pas atteint la limite fixée par l'ASTM. De plus, à 430 jours, le gonflement se stabilise à 0,025% pour le mortier 1 et à 0,045% pour le mortier 2 tandis que le gonflement du mortier préparé à partir du ciment CEM I 52,5N PM ES augmente toujours.

Contrairement au mortier préparé à partir d'un ciment de type CEM I 52.5N PM ES, les mortiers préparés à partir des ciments de l'invention sont très peu sensibles aux attaques sulfatiques externes.

## Revendications

1. Ciment comprenant :
- de 90% à 100% (p/p) d'un clinker contenant
• de 50% à 80% (p/p) de C₃S ;
• de 4% à 40% (p/p) de C₂S ;
• de 0% à 20% (p/p) de C₄AF ; et
• de 0% à 2% (p/p) de C₃A ;
- 0% à 10% (p/p) de fumée de silice ; et
- moins de 1,5% (p/p) de $ ;
à l'exclusion des ciments comprenant :
- 90% (p/p) de clinker contenant
• 55% (p/p) de C₃S ;
• 20% (p/p) de C₂S ;
• 15,2% (p/p) de C₄AF ; et
• 1,6% (p/p) de C₃A ;
- et 10% (p/p) de fumée de silice.

2. Ciment selon la revendication 1, **caractérisé en ce qu'**il comprend moins de 1% (p/p) de $.

3. Ciment selon la revendication 1 ou 2, **caractérisé en ce que** le clinker comprend de 0% à 1,5% (p/p) C₃A.

4. Ciment selon la revendication 3, **caractérisé en ce que** le clinker comprend de 0% à 1% (p/p) C₃A.

5. Ciment selon l'une quelconque des revendications 1 à 4, **caractérisé en ce que** le clinker comprend de 65% à 80% (p/p) de C₃S.

6. Ciment selon l'une quelconque des revendications 1 à 5, **caractérisé en ce qu'**il comprend de 0% à 5% (p/p) de fumée de silice.

7. Ciment selon la revendication 6, **caractérisé en ce qu'**il comprend de 0% à 2% (p/p) de fumée de silice.

8. Ciment selon l'une quelconque des revendications 1 à 7, **caractérisé en ce qu'**il comprend également du gypse pour ajuster le teneur en $, celle-ci demeurant inférieure à 1,5%.

9. Béton comprenant un ciment selon l'une quelconque des revendications 1 à 8.

10. Coulis comprenant un ciment selon l'une quelconque des revendications 1 à 8.

11. Mortier comprenant un ciment selon l'une quelconque des revendications 1 à 8.

## Patentansprüche

1. Zement, umfassend:
- 90 % bis 100 % (p/p) eines Klinkers, enthaltend
-- 50 % bis 80 % (p/p) C₃S;
-- 4 % bis 40 % (p/p) C₂S;
-- 0 % bis 20 % (p/p) C₄AF; und
-- 0 % bis 2 % (p/p) C₃A;
- 0 % bis 10 % (p/p) Quarzstaub; und
- unter 1,5 % (p/p) $;
mit Ausnahme der Zemente, umfassend:
- 90 % (p/p) Klinker, enthaltend
-- 55 % (p/p) C₃S;
-- 20 % (p/p) C₂S;
-- 15,2 % (p/p) C₄AF; und
-- 1,6 % (p/p) C₃A;
- und 10 % (p/p) Quarzstaub.

2. Zement nach Anspruch 1, **dadurch gekennzeichnet, dass** er unter 1 % (p/p) $ umfasst.

3. Zement nach Anspruch 1 oder 2, **dadurch gekennzeichnet, dass** der Klinker 0 % bis 1,5 % (p/p) C₃A umfasst.

4. Zement nach Anspruch 3, **dadurch gekennzeichnet, dass** der Klinker 0 % bis 1 % (p/p) C₃A umfasst.

5. Zement nach einem der Ansprüche 1 bis 4, **dadurch gekennzeichnet, dass** der Klinker 65 % bis 80 % (p/p) C₃S umfasst.

6. Zement nach einem der Ansprüche 1 bis 5, **dadurch gekennzeichnet, dass** er 0 % bis 5 % (p/p) Quarzstaub umfasst.

7. Zement nach Anspruch 6, **dadurch gekennzeichnet, dass** er 0 % bis 2 % (p/p) Quarzstaub umfasst.

8. Zement nach einem der Ansprüche 1 bis 7, **dadurch gekennzeichnet, dass** er ebenfalls Gips umfasst, um den Gehalt an $ einzustellen, wobei dieser unter 1,5 % bleibt.

9. Beton, umfassend einen Zement nach einem der Ansprüche 1 bis 8.

10. Einpressmörtel, umfassend einen Zement nach einem der Ansprüche 1 bis 8.

11. Mörtel, umfassend einen Zement nach einem der Ansprüche 1 bis 8.

## Claims

1. A cement comprising :
- from 90% to 100% (w/w) of a clinker containing
• from 50% to 80% (w/w) of C₃S;
• from 4% to 40% (w/w) of C₂S;
• from 0% to 20% (w/w) of C₄AF; and
• from 0% to 2% (w/w) of C₃A;
- from 0% to 10% (w/w) of silica fume; and
- less than 1.5% (w/w) of $;
excluding cements comprising:
- 90% (w/w) of clinker containing
• 55% (w/w) of C₃S;
• 20% (w/w) of C₂S;
• 15.2% (w/w) of C₄AF; and
• 1.6% (w/w) of C₃A;
- and 10% (w/w) of silica fume.

2. The cement according to claim 1, **characterized in that** it comprises less than 1% (w/w) of $.

3. The cement according to claim 1 or 2, **characterized in that** the clinker comprises from 0% to 1.5% (w/w) of C₃A.

4. The cement according to Claim 3, **characterized in that** the clinker comprises from 0% to 1% (w/w) of C₃A.

5. The cement according to any one of claims 1 to 4, **characterized in that** the clinker comprises from 65% to 80% (w/w) of C₃S.

6. The cement according to any one of claims 1 to 5, **characterized in that** it comprises from 0% to 5% (w/w) of silica fume.

7. The cement according to claim 6, **characterized in that** it comprises from 0% to 2% (w/w) of silica fume.

8. The cement according to any one of claims 1 to 7, **characterized in that** it also comprises gypsum to adjust the content of $, the latter remaining less than 1.5%.

9. A concrete comprising a cement according to any one of claims 1 to 8.

10. A grout comprising a cement according to any one of claims 1 to 8.

11. A mortar comprising a cement according to any one of claims 1 to 8.
